# EUROPEAN PATENT SPECIFICATION

(11) **EP 2 355 464 B1**
(45) Date of publication and mention of the grant of the patent: **16.05.2012**
(21) Application number: 10152028.6
(22) Date of filing: 28.01.2010
(51) Int. Cl.: H04M 1/24

(54) **Power switching for electronic device test equipment**
Leistungsumschalter für Testgerät für elektronische Vorrichtung
Commutation d'alimentation pour équipement de test de dispositifs électroniques

(43) Date of publication of application: 10.08.2011
(73) Proprietor: RESEARCH IN MOTION LIMITED, Waterloo, Ontario N2L 3W8 (CA)
(72) Inventor: Goja, Karoly, Waterloo Ontario N2L 3W8 (CA); Ni, Jun, Waterloo Ontario N2L 3W8 (CA); Dodd, William Mark, Waterloo Ontario N2L 3W8 (CA); Ivannikov, Arkady, Waterloo Ontario N2L 3W8 (CA)
(74) Representative: Moore, Barry

(56) References cited:
- US-A1- 2002 160 768
- US-A1- 2006 064 266

## Description

The present application relates generally to test equipment for battery powered electronic devices, such as mobile devices. More particularly, the present application relates to power switching for such test equipment.

A battery-powered electronic device typically undergoes a number of tests prior to large scale production. Such tests can be performed on a device-under-test (DUT), which is substantially similar with respect to functional components to the final production device, and in many cases is the final production device. For example, a mobile electronic device typically undergoes at least three tests: Radio Frequency Test, Audio Frequency Test, and Combined Functional Test. During the tests various parameters are measured, such as current and voltage.

To measure the parameters accurately, the DUT is powered via an external power supply, and its internal battery is removed. The tests can not be performed without having the device fully turned on. Some tests, such as a charging test, cannot be performed with the device's internal battery in place.

The DUT can be placed in a transport frame, which mates with a test fixture powered by the external power supply. After the device is connected with the external power supply, the device boots up since the device has been without battery power beforehand, and the tests are performed. If the device is booted up prior to insertion in the fixture, the device will lose the connection and will have to boot up again before the test can be performed.

Once the test is completed, the device is disconnected from the power supply and the next device is connected with the power supply. Upon being connected, the next device will boot up and the tests will be performed. As such, every time a device is connected to the power supply, the device boots up before tests can be performed.

DUT boot up can take 10-45 seconds, depending on the device. Since the test time itself is only about 30 seconds - 2 minutes, the boot up contributes significant idle time to the overall testing process. Testing equipment and testing personnel are forced to remain idle while the device boots up, causing a bottleneck and preventing more devices from being tested during a given time period.

US 2002/160768 A1 discloses a advanced process for moving a Device under Test (DUT) from surface mount to completion and shipping. The process takes a raw populated Printed Circuit Board (PCB) panel or similar article of manufacture and conducts all possible solder, electrical, boundary scan and flashed self-testing. Individual panels are routed out of larger panels and placed into basic electronic device chassis on a motorized and power delivering fixture carrying a fixture adapter to interface with the electronic device. Power is provided as soon as is feasible in order to leverage the DUTs ability to facilitate it's own functional certification. Conditions for impending measurement can be set up on a powered electronic device so that measurements may be made the moment the testing instrumentation is ready to take measurements.

### BRIEF DESCRIPTION OF THE DRAWINGS

Implementations will now be described, by way of example only, with reference to the attached Figures, wherein:

Figure **1** illustrates a block diagram of an apparatus for testing a battery-powered device-under-test in a test fixture according to an implementation of the present application.

Figure **2** illustrates a block and circuit diagram of an apparatus for testing a battery-powered device-under-test in a test fixture according to another implementation of the present application.

Figure **3** illustrates an electrical circuit diagram of a switching circuit on a transport frame for testing a DUT according to an implementation.

Figure **4** illustrates front perspective view of a transport frame for testing a DUT according to an implementation of the present application.

Figure **5** is a flowchart illustrating a method of power switching in a system for testing a DUT according to an implementation of the present application.

Figure **6** illustrates a graphical plot of power usage in a DUT according to an implementation of the present application.

Figure **7** illustrates a block diagram of a system for testing first and second DUTs according to an implementation of the present application.

Figures **8** and **9** are flowcharts illustrating a method of power switching in a system for testing first and second DUTs according to an implementation of the present application.

Figure **10** is a block diagram of a mobile electronic device according to one example.

### GENERAL

Generally, the present application may provide a method and apparatus for testing a battery-powered electronic device-under-test in a transport frame engaged with a test fixture. A transport frame power supply may be arranged to provide power to the DUT in a pre-testing stage. A switching circuit may be arranged to switch from the

transport frame power supply to a test fixture power supply in response to receiving a power switching signal indicating satisfaction of a pre-testing condition. Power from the test fixture power supply can then be switched back to the first transport frame, or to a second transport frame, to begin testing a second DUT. The ability to start a DUT test without having to wait for the device to boot-up in the test fixture reduces test time and increases efficiency of use of test equipment.

In one aspect there is provided in the following a transport frame to test a battery-powered electronic device-under-test 'DUT' in a test fixture, the test fixture arranged to receive the transport frame and to test the DUT when the transport frame is engaged with the test fixture, the transport frame comprising: a transport frame power supply arranged to provide power to the DUT in a pre-testing stage; and a switching circuit arranged to switch from the transport frame power supply to a test fixture power supply provided in the test fixture in response to receiving a first power switching signal indicating satisfaction of a pre-testing condition, and arranged to switch from the test fixture power supply to the transport frame power supply in response to receiving a second power switching signal indicating completion of a testing stage.

Implementations of the present application can reduce equipment utilization per test, increase equipment utilization efficiency, increase production efficiency and decrease overall device testing cost.

For example, test equipment such as the Agilent 8960 Series 10 Wireless Communications Test Set, cost about $35,000-$40,000 or more each. Keeping such equipment idle is a waste of expensive resources. Without redesigning the device operating system to reduce boot time, implementations of the present application can reduce test time by addressing the contribution of such boot-up time. Such challenges are faced by manufacturers of battery powered electronic devices, such as mobile device or mobile phone manufacturers, or any other entity operating in a similar testing environment.

Implementations of the present application can be applied to testing any battery-powered electronic device that has a boot up time.

A test station cannot communicate with a DUT and start testing until the DUT fully boots up. By booting up the DUT before plugging the DUT into test station, a tester can communicate with the DUT immediately through USB and start testing.

In an implementation, the present application may provide an apparatus for testing a DUT, such as a mobile device, in a test fixture. The test fixture may be arranged to receive the transport frame and to test the DUT when the transport frame is engaged with the test fixture. The test fixture may comprise a test fixture power supply arranged to provide power to the electronic device in a testing stage. The apparatus may comprise a transport frame power supply arranged to provide power to the DUT in a pre-testing stage, and a switching circuit. The switching circuit may be arranged to switch from the transport frame power supply to the test fixture power supply in response to receiving a first power switching signal indicating satisfaction of a pre-testing condition, and arranged to switch from the test fixture power supply to the transport frame power supply in response to receiving a second power switching signal indicating completion of a testing stage.

The apparatus can further comprise a switching controller to control power switching between the transport frame power supply and the test fixture power supply, the switching controller being arranged to generate the first and second power switching signals. The switching controller can be provided in the test fixture. The switching controller can comprise a machine readable medium storing statements and instructions for execution by a processor to control power switching between the transport frame power supply and the test fixture power supply.

The switch from the transport frame power supply to the test fixture power supply can cause a voltage drop, and the switching circuit can be arranged such that the voltage drop is below a reboot tolerance for the DUT.

The switching circuit can comprise a load switch, such as a metal oxide semiconductor field effect transistor (MOSFET). The switching circuit can comprise an isolator arranged to electrically isolate the transport frame power supply from the test fixture power supply.

In another implementation, the present application may provide a method of power switching in a system for testing a DUT, the system including a transport frame and a test fixture arranged to receive the transport frame and to test the DUT when the transport frame is engaged with the test fixture. The method may comprise the following steps: providing power to the DUT in a pre-testing stage via a transport frame power supply when the DUT is housed in the transport frame; switching from the transport frame power supply to a test fixture power supply in response to a first power switching signal indicating satisfaction of the pre-testing condition; and switching from the test fixture power supply to the transport frame power supply in response to receiving a second power switching signal indicating completion of the testing stage.

The first power switching signal can comprise: an indication that the transport frame is inserted in the test fixture and the test fixture power supply is turned on; or an indication that the transport frame is inserted in the test fixture and the test fixture power supply is turned on, and that the DUT is ready for initiation of the testing stage.

The method can comprise determining whether the pre-testing condition is satisfied. The method can further comprise initiating the testing stage in response to receiving a test initiation signal indicating the DUT is ready for initiation of the testing stage. The method can include determining whether the DUT is ready for initiation of the testing stage.
Determining whether the DUT is ready for initiation of the testing stage can include receiving a determination that current drawn from the DUT is substantially similar to a known targeted idle current of the DUT. The method can further comprise determining that current drawn from the DUT is substantially similar to a known targeted idle current of the DUT.

The method can further comprise charging the transport frame power supply.

In another implementation, the present application may provide a computer-readable medium storing statements and instructions for execution by a processor to perform a method of power switching in a system for testing a DUT as described herein.

In a further implementation, the present application may provide a system for testing a battery-powered electronic device-under-test (DUT). The system may comprise: a transport frame arranged to receive the DUT; a transport frame power supply arranged to provide power to the DUT in a pre-testing stage; a test fixture arranged to receive the transport frame and to test the DUT when the transport frame is engaged with the test fixture; a test fixture power supply arranged to provide power to the electronic device after satisfaction of a pre-testing condition and in a testing stage; and a switching circuit. The switching circuit may be arranged to switch from the transport frame power supply to the test fixture power supply in response to receiving a first power switching signal indicating satisfaction of the pre-testing condition, and arranged to switch from the test fixture power supply to the transport frame power supply in response to receiving a second power switching signal indicating completion of the testing stage.

The transport frame power supply can be provided within the transport frame. The test fixture power supply can be provided within the test fixture. The test fixture further comprise a charging circuit arranged to charge the test fixture power supply, such as when the transport frame is plugged into test fixture or a special charging cradle.

Two powered-battery emulators can be provided for alternatively plugging into fixture. When one battery emulator is in testing, the other one can boot up DUT first from a real battery on emulator. In a yet further implementation, the present application may provide a system for testing first and second battery-powered electronic devices-under-test, including: a first hot emulator arranged to receive the first DUT, the first hot emulator comprising a first battery arranged to provide power to the first DUT in a first pre-testing stage; a second hot emulator arranged to receive the second DUT, the second hot emulator comprising a second battery arranged to provide power to the first DUT in a second pre-testing stage; an external power supply, in electrical communication with the first and second hot emulators, and arranged to provide testing power to the first and second DUTs during first and second testing stages, respectively; and a switching circuit arranged to switch the testing power from the first hot emulator to the second hot emulator to begin the second testing stage in response to receiving a first test completion signal indicating the first DUT has completed the first testing stage.

In an implementation, the present application may provide a testing system for testing first and second battery-powered electronic devices-under-test (DUTs). The system includes: first and second transport frames for receiving the first and second DUTs, the first transport frame including a first transport frame power supply and a first switching circuit, and the second transport frame including a second transport frame power supply and a second switching circuit; a test fixture arranged to receive the first and second transport frames and to test the first and second DUTs, respectively, when the first and second transport frames are engaged with the test fixture, the test fixture including a test fixture power supply; and a switching controller in communication with the first and second switching circuits and arranged to generate first and second power switching signals.

The first switching circuit may be arranged to switch from the first transport frame power supply to the test fixture power supply in response to receiving a first power switching signal indicating satisfaction of the pre-testing condition, and arranged to switch from the test fixture power supply to the first transport frame power supply in response to receiving a second power switching signal indicating completion of a testing stage for the first DUT. The switching controller is arranged to initiate power switching of power supplied by the test fixture power supply from the first transport frame to the second transport frame to begin a testing stage for the second DUT.

The second switching circuit may be arranged to switch from the second transport frame power supply to the test fixture power supply in response to receiving a third power switching signal indicating satisfaction of a second pre-testing condition, and arranged to switch from the test fixture power supply to the second transport frame power supply in response to receiving a fourth power switching signal indicating completion of the testing stage for the second DUT. The switching controller is arranged to generate the third and fourth power switching signals.

In another implementation, the present application may provide a method of power switching in a system for testing first and second DUTs, the system comprising first and second transport frames for receiving the first and second DUTs, respectively, and a test fixture arranged to receive the first and second transport frames and to test the first and second DUTs, respectively, when the first and second transport frames are engaged with the test fixture. The method may comprise the following steps: providing power to the first DUT in a pre-testing stage via a first transport frame power supply when the DUT is housed in the first transport frame; switching from the first transport frame power supply to a test fixture power supply in response to receiving a first power switching signal indicating satisfaction of a first pre-testing condition; switching from the test fixture power supply to the first transport frame power supply in response to receiving a second power switching signal indicating completion of a testing stage for the first DUT; switching from the second transport frame power supply to a test fixture power supply in response to receiving a third power switching signal indicating satisfaction of a second pre-testing condition; and switching from the test fixture power supply to the second transport frame power supply in response to receiving a fourth power switching signal indicating completion of a testing stage for the second DUT.

### DESCRIPTION OF PREFERRED EMBODIMENTS

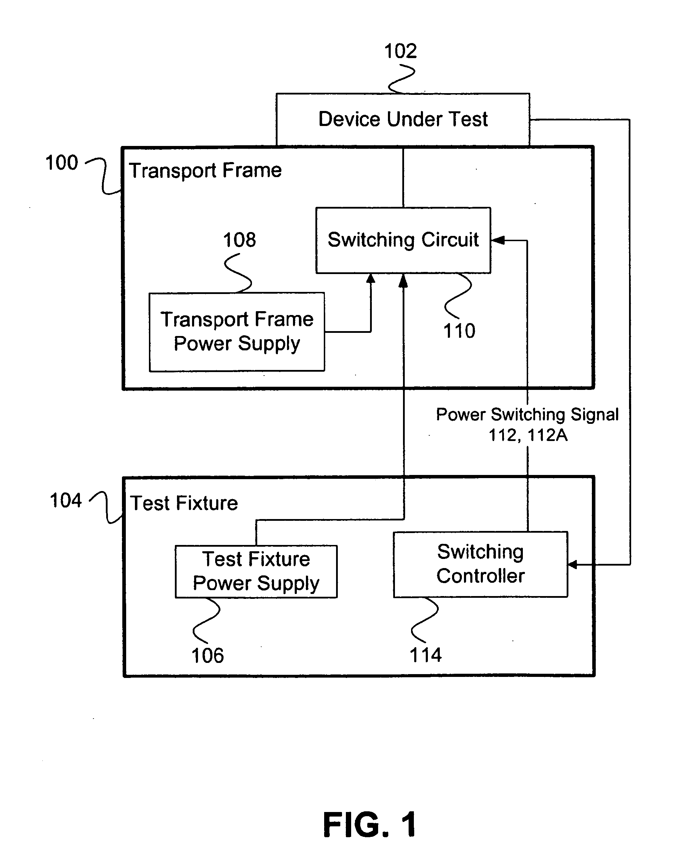

Figure 1 illustrates a block diagram of an apparatus for testing a battery-powered device-under-test in a test fixture according to an implementation of the present application. The apparatus **100** is for testing a DUT **102** using a test fixture **104.** The test fixture **104** is arranged to receive the apparatus, or transport frame, and to test the DUT when the apparatus is engaged with the test fixture **104**. The test fixture includes a test fixture power supply, or external power supply, **106** arranged to provide power to the DUT in a testing stage. The apparatus **100** can be electrically connected to the test fixture, or test system, **104** via a USB connection.

The apparatus **100** includes a transport frame power supply **108** arranged to provide power to the DUT in a pre-testing stage, or boot up stage. In an implementation, the transport frame power supply **108** comprises a battery.

The apparatus **100** also includes a switching circuit **110** arranged to switch from the transport frame power supply **108** to the test fixture power supply **106** in response to receiving a first power switching signal **112** indicating satisfaction of a pre-testing condition. The pre-testing condition can comprise whether the transport frame is inserted in the test fixture, and the test fixture power supply is turned on. The apparatus can determine whether the DUT **102** is ready for initiation of a testing stage. The testing stage can comprise a current test. The power supply for the DUT **102** is maintained during switching of the power sources. Power is switched from the test fixture power supply **106** to the transport frame power supply **108** in response to receiving a second power switching signal **112A** indicating completion of a testing stage.

The term "pre-testing stage" as used herein represents a stage that precedes the testing stage, and during which the pre-testing condition has not yet been satisfied. The transport frame power supply **108** supplies power to the DUT **102** during the pre-testing stage. Power is switched from the transport frame power supply **108** to the test fixture power supply **106** in response to satisfaction of a pre-testing condition. This means that the test fixture power supply **106** can provide power to the DUT **102** after the pre-testing condition has been satisfied and until the DUT is ready for testing, as well as during the actual testing stage. In other words, between the pre-testing stage and the testing stage, there can be an intermediate stage during which the pre-testing condition has been satisfied, but the DUT is not ready for initiation of the testing stage. The transport frame power supply **108** provides power to the DUT during such an intermediate stage.

Rather than switching due to loss of power from a primary power source, implementations of the present application switch power in response to receipt of a first power switching signal **112**, which can be generated based on a predetermined condition, or pre-testing condition, being satisfied. For example, the first power switching signal **112** can be generated when the transport frame **100** is electrically engaged, or power engaged, with the test fixture **104** and the test fixture power supply **106** is turned on, regardless of whether the DUT **102** has completed boot up.

A switching controller **114** can control switching from the transport frame power supply **108** to the test fixture power supply **106**. The switching controller **114** can generate the first and second power switching signals **112** and **112A** received by the switching circuit **110**, in response to which power is switched. The first power switching signal **112** can be generated in response to satisfaction of a pre-testing condition. In one implementation, the first power switching signal **112** can be generated in response to manual actuation of a switch enable means by an operator, such manual actuation being the pre-testing condition that is satisfied. The second power switching signal **112A** can be generated in response to completion of a testing stage.

The switching circuit **110** can perform an automatic switching between the transport frame power supply **108** and the test fixture power supply **106** in order to obtain or acquire current or voltage measurements for the test.

The switching controller **114** can comprise a machine readable medium storing statements and instructions for execution by a processor to control switching from the transport frame power supply to the test fixture power supply in response to receiving a first power switching signal indicating satisfaction of a pre-testing condition. In an implementation, the processor detects the presence of a transport frame **100** that is engaged with the test fixture **104**, and the test fixture power supply **106** is turned on. The switching controller **114** can also determine whether the DUT is ready for initiation of the testing stage. For example, the switching controller can detect a fully booted DUT, such as through current detection or polling for a connection. In an example, the processor then initiates the testing stage. In an implementation, the switching controller **114** is implemented on a personal computer (PC) and comprises a test sequence or test routine, or statements and instructions for performing the test sequence.

The first power switching signal **112** can be generated in response to a positive connection polling result. For example, the switching controller **114**, or a test sequence provided therein, can poll the DUT **102** until a positive connection polling result is obtained. In an implementation, a device driver on the PC can poll for a connection. For example, the test sequence in the switching controller **114** can continually request a connection to the DUT **102** from the device driver, or request connection to the first available DUT if there are two or more being tested.

If the device driver is configured to allow for connection polling, then polling can continue until the connection is made, after the device is fully booted, or a timeout condition is reached. One example of such a device driver configuration is that the device driver does not block execution of the test for a long period but returns with a negative response. Alternatively, in a situation in which the device driver blocks execution of the sequence or causes some type of catastrophic error, current detection can be used, and then connection polling. This polling can be performed either internally to the device driver or externally in the test sequence.

The DUT **102** has a different current draw depending on whether the device is booting up, or has completed boot up. The determination of whether the DUT 102 is ready for initiation of the testing stage can be made based on a determination that current drawn from the DUT **102** is stable, or that the current drawn is substantially similar to a known targeted idle current of the DUT, indicating that boot up has been completed and the device is idle. The determination can be made at the switching controller **114**, which is preferably in communication with test fixture power supply **106** to detect the current drawn therefrom. For example, in an implementation, the determination can be made by a PC test sequence of the switching controller **114** which is in communication with the test fixture power supply **106** to detect the current drawn. This current detection is performed after the power has been switched to the test fixture power supply **106**.

For example, when the transport frame **100**, or emulator, is inserted into test fixture **104**, a test sequence can switch the power from the transport frame power supply **108**, such as a battery, to the power supply **106**. After the power switch over, a test sequence can start detecting the current draw from the power supply **106** to determine if the DUT **102** is fully booted up. If the current measurement is around a targeted idle current of the DUT **102**, the test sequence can start testing immediately.

In an example, a test sequence in the switching controller **114** polls the power supply **106** at a predetermined interval until the current reaches the idle threshold or until a timeout condition is reached. The test routine can establish a connection to the device and executes the test sequence automatically once the current threshold is met.

According to an implementation of the present application, a battery is provided in the apparatus as the transport frame power supply **108**. This allows the device to be powered-up, using the battery **108** in the transport frame **100**, prior to its insertion in the test fixture in order to perform the test. The DUT **102** can start testing immediately when the DUT **102** plugs in, instead of waiting for DUT **102** boot-up via the external power supply **106**. This can reduce or eliminate the wait time associated with device boot-up time. For example, for a certain model of DUT **102** that was tested for two years, the wait time reduction corresponded to 530 days.

As mentioned earlier, in order to measure the device's current draw, an on-board battery cannot be inserted into the device during the test. The test fixture power supply **106** in conjunction with a switching controller **114** are used to perform a current test, by measuring a drawing current or a sinking current and determining if the device is working properly. An apparatus, or battery emulator, according to an implementation of the present application emulates the on-board battery performance for the purposes of testing. Battery modules often use encryption such that only a particular battery can be used with a given device. As such, a transport frame power supply **108** implemented as a battery can comprise encryption restricting use of the battery to a device model represented by the DUT **102**.

In an implementation, the switching circuit **110** is arranged to switch power from the battery to the power supply while minimizing an interruption in current flow or a change in the voltage, and avoiding a loss of connection. If there is a large enough hiccup in the level of power supply, the DUT **102** will reboot. In an implementation, the switch from the transport frame power supply to the test fixture power supply causes a voltage drop, and the switching circuit **110** is arranged such that the voltage drop is below a reboot tolerance for the DUT **102**.

The tolerance in the switching is related to the device's tolerance for rebooting. In an exemplary device, a voltage below 2.5 volts for several milliseconds will trigger a reboot. Components or elements of the switching circuit **110**, and optionally the switching controller **114**, are selected in order to achieve a voltage drop that is below the DUT's reboot tolerance. For devices with different tolerances, the switching circuit **110**, and optionally the switching controller **114**, can be modified accordingly, as is evident to one of ordinary skill in the art.

While functionality is described above and in examples as being performed by the switching controller **114**, the switching controller functionality can alternatively be performed by any other processor, computer or device in communication with the test fixture **104** and the DUT **102**.

In an implementation, the switching controller **114** itself can be provided outside of the test fixture **104**, such as in the transport frame **100** or in a separate device or apparatus. The location of the switching controller **114**, or switching controller functionality, can be anywhere that the switching controller is able to determine the inputs and outputs of the system, such as having access to data from the power supply **106** of the test fixture **104**.

For example, if current is not being measured with the power supply, and rather using a current meter on the transport frame **100**, the switching controller **114** can be provided on the transport frame **100**. In that case, the power supply measurement can be taken externally from the transport frame **100**. As long as there is a manner in which current and voltage can be measured on the transport frame **100**, such as using a microcontroller provided on the transport frame **100**, the determination can be made on the transport frame **100** and power switching can be performed accordingly.

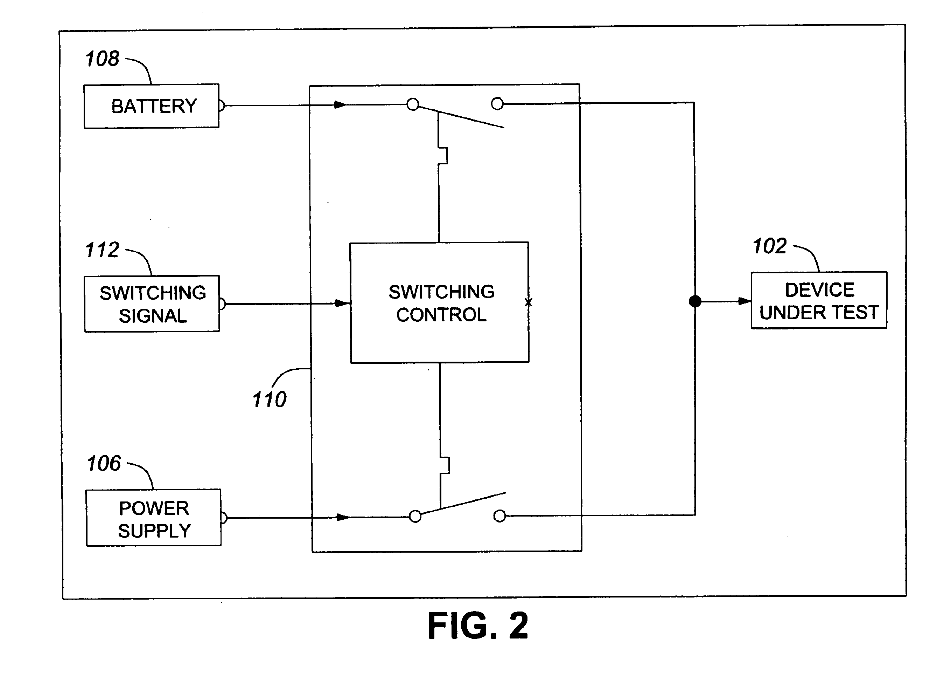

Figure **2** illustrates a block and circuit diagram of an apparatus for testing a DUT in a test fixture according to another implementation of the present application. The implementation in Figure **2** is similar to the implementation in Figure **1**, and shows the apparatus in isolation from the test fixture **104**. In this example, the transport frame power supply **108** is implemented as a battery. The switching circuit **110** receives the switching signal **112** and power from the battery **108** and the test fixture power supply **106**.

An implementation of the present application includes: a battery; a means for switching the power source of the device from the battery to an external power supply, such as provided by a base plate or test fixture; and a means for verifying that the device has fully turned on when the transport frame is connected with the base plate.

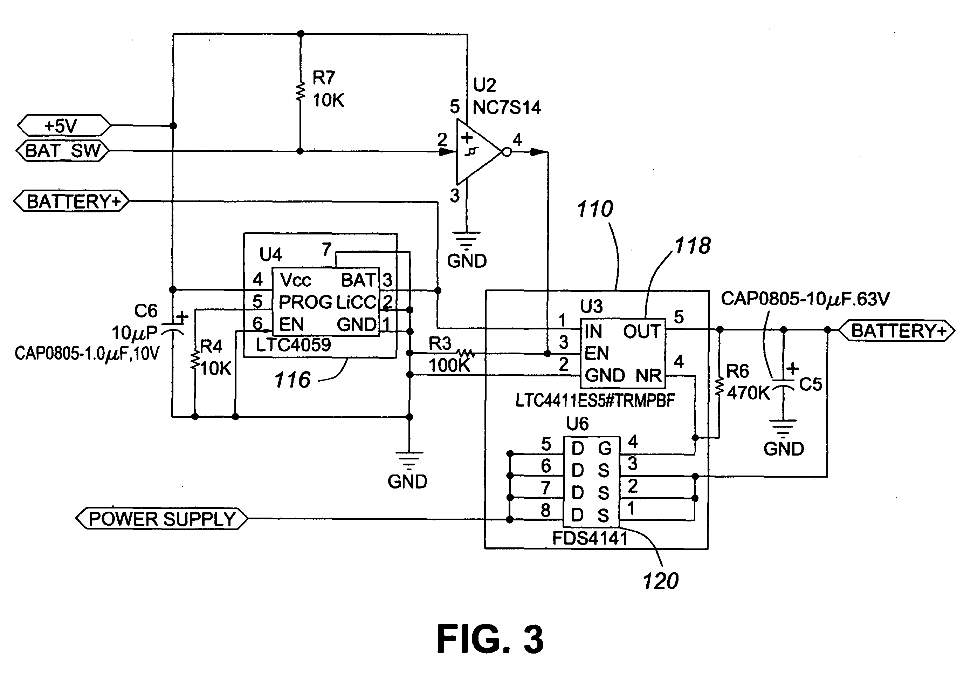

Figure **3** illustrates an electrical circuit diagram of the switching circuit **110** on a transport frame **100** according to an implementation. In Figure **3**, a particular implementation is shown in detail, in which the transport frame power supply is a battery. The switching circuit **110** in Figure 3 can perform power switching without a drop in power that would trigger a reboot. Using implementations described herein, the voltage drop is very small and the power can be switched back and forth between the battery **108** and the power supply **106**.

In Figure **3**, a charging circuit **116** is arranged to charge the battery in the transport frame. The charging circuit can provide charging current for a real battery on the transport frame, or emulator, to extend battery lifetime on the transport frame. The charging circuit **116** can be turned on only when the + fixture power is connected, for example, +5 V when transport frame **100** is inserted into test fixture **104**. Providing the charging circuit **116** gives an advantage that the battery need not be replaced frequently. The charging circuit **116** can be provided in the test fixture.

In Figure **3**, the switching circuit **110** can switch between the battery **108** and the power supply **106** and isolate the two from each other. In an implementation, the switching circuit **110** comprises an ideal diode **118** arranged to electrically isolate the transport frame power supply from the test fixture power supply.

The switching circuit **110** can comprise a load switch **120** having low static Drain to Source on resistance, which has substantially no impact on current measurement for DUT test.

The load switch **120** can comprise a metal oxide semiconductor field effect transistor (MOSFET), power MOS device or power FET. The load switch **120** has a small switch-over voltage loss and can be a p-channel MOSFET. The load switch **120** also works well as an isolating switch since the power consumption is very low, and the load switch **120** prevents backup current to the test fixture power supply **106**. When turning on the device, the voltage of battery **108** can be about 4.2 volts, which is higher than the voltage of the power supply **106** of 3.8 volts. In that case, current can flow from the battery **108** to the test fixture power supply **106,** which is undesirable. Therefore, the load switch **120** isolates the battery **108** from the test fixture power supply **106** to prevent current leakage there between. The load switch **120** can enable the switching circuit **110** to carry out a method of instantaneously switching the device's power source from a battery **108** in the test module to the external power supply **106.**

Alternatives to using a load switch **120** include a basic switch, or a diode connected to both the battery and the power supply. In some cases, the use of a diode in the fixture can trigger a power supply protection fault because some of the battery voltage trickles over to the power supply. Also, using a diode for switching has the drawback of a 0.7 V drop across a diode, meaning that the diode may not work for the purposes desired.

An advantage of using a load switch for switching is that the load switch is better than using relay-capacitor combination, since relays get worn out, have bigger metal parts and the combination alters the radiated RF characteristics of the DUT, leading to inaccurate RF measurements. A load switch has low static Drain to Source on resistance, which has substantially no impact on current measurement for device test.

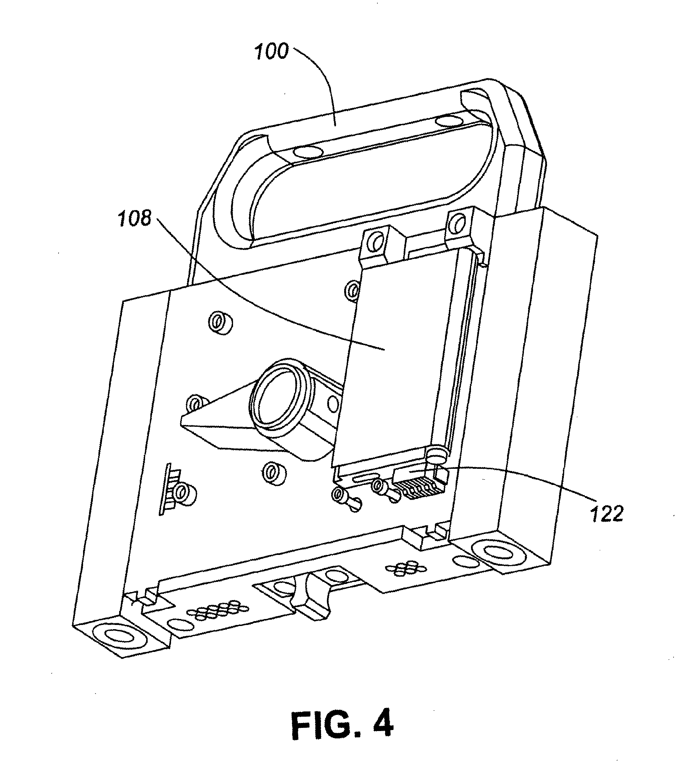

Figure **4** illustrates front perspective view of a transport frame for testing a DUT according to an implementation of the present application. This figure illustrates an example of a visual representation of a transport frame **100**, and the location of a transport frame power supply **108**, or battery, in a position distinct from the location in which the DUT is placed (on the opposite side not shown in Figure **4**). The battery **108** can have an associated connector **122** to connect with circuitry on the transport frame 100.

According to an implementation described herein, even when the transport frame 100 is not attached with a base plate or test fixture **104**, the DUT can receive power from the transport frame power supply **108**. So, a device resting in the transport frame can be turned on even when the transport frame is not attached with the base plate or test fixture, and permit boot up prior to testing, such that the device will not require a reboot after power switching.

An example implementation of the present application includes four components, in addition to the primary components described earlier:1) Load Switch **120**. The present application includes a means for switching the power source of the device from the transport-frame battery **108** to the base plate. This maintains power supply for the device during power switching by using a Load Switch **120** for power switching between a real battery **108** and test fixture power supply 106; 2) An ideal diode 118 is connected between battery **108** and Load Switch **120** to prevent backward current from power supply. The ideal diode **118** has very low voltage drop and Forward-on-Resistance across the ideal diode **118** during normal operation. 3) To extend battery lifetime on transport frame, a charging circuit **116** provides charging current for real battery **108.**4) A means for verifying that the device is turned on and fully booted up. The means comprises monitoring the current drawn through the base plate from test fixture power supply **106,** after power has been switched thereto, and detecting a current which is below a predetermined current threshold. Once the current is detected to be below the threshold then the test sequence is automatically started.

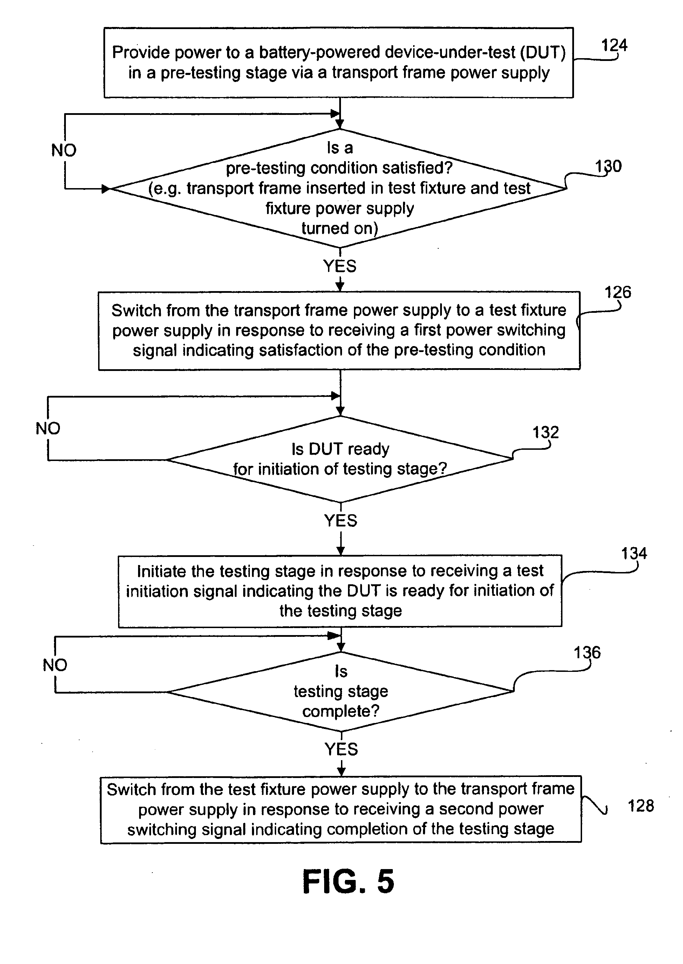

Figure 5 is a flowchart illustrating a method of power switching in a system for testing a DUT according to an implementation of the present application. The system can include a transport frame **100** and a test fixture **104** arranged to receive the transport frame **100** and to test the DUT **102** when the transport frame **100** is engaged with the test fixture **104**. The method comprises: providing power to the DUT in a pre-testing stage via a transport frame power supply **108** when the DUT **102** is housed in the transport frame **100** (action **124**); switching from the transport frame power supply **108** to a test fixture power supply **106** in response to receiving a first power switching signal indicating satisfaction of a pre-testing condition (action **126**); and switching from the test fixture power supply to the transport frame power supply in response to receiving a second power switching signal indicating completion of a testing stage (action **128**).

The method can include determining whether the pre-testing condition is satisfied (action **130**). This action **130** can be performed after action **124**. For example, action **130** can include determining whether the transport frame is inserted in the test fixture, and the test fixture power supply is turned on.

The method can further include determining whether the DUT is ready for initiation of the testing stage (action **132**). Such determination can be made on the basis of whether the current drawn from the DUT is substantially similar to a known targeted idle current of the DUT. For example, action **132** can include receiving a determination that current drawn from the DUT **102** is substantially similar to a known targeted idle current of the DUT. Action **132** is performed after action **126**, since the current can be read or determined from the test fixture power supply **106** only after power is switched to the test fixture power supply **106** in action **126**.

The method in Figure **5** can include initiating the testing stage in response to receiving a test initiation signal indicating the DUT is ready for initiation of the testing stage (action **134**). The action **134** is performed after action **132**, and the test initiation signal can be generated based on the determination in action **132**. The method can also include determining whether the testing stage is complete (action **136**). The action **136** is performed after the action **134**, and the second power switching signal received in action 128 can be generated based on the determination in action **136**.

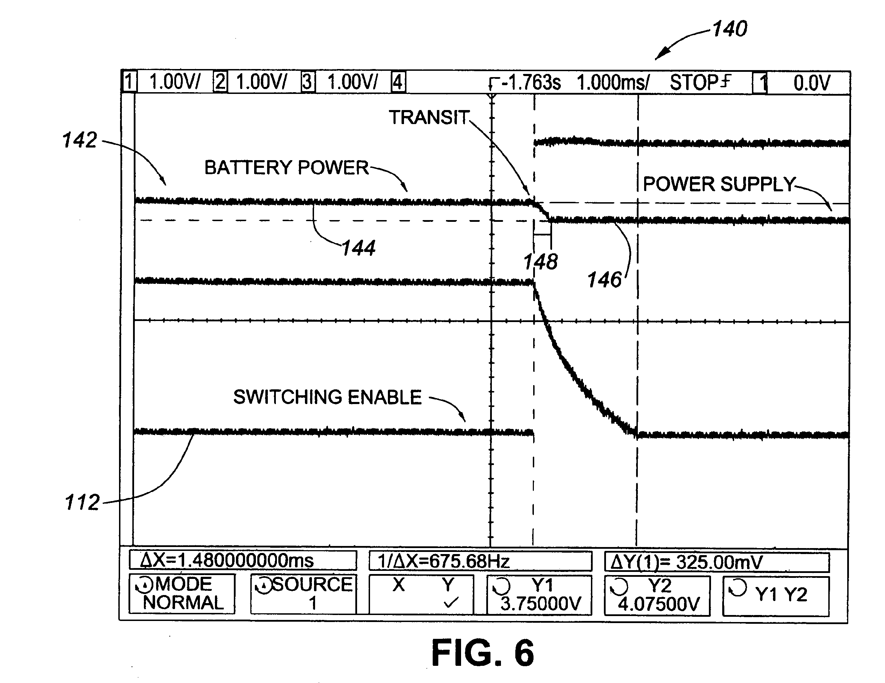

Figure **6** illustrates an exemplary graphical plot, **140** generated by an oscilloscope, of power usage in a DUT according to an implementation of the present application. The power used by the DUT is shown on the plot as a DUT power usage signal **142**. A first portion **144** of the DUT power usage signal **142** represents the power applied to the DUT using the transport frame power supply **108**. When the switching signal **112**, or switch enable signal, changes from LOW TO HIGH, power applied to the DUT is changed from the transport frame power supply **108** to the test fixture power supply **106.** The resulting power applied is shown in a second portion **146** of the displayed DUT power usage signal **142**. The voltage level provided to the DUT is changed from 4.1V in the first portion **144** to 3.8V in the second portion **146**. A transition period **148** can be about 0.3 milliseconds, as shown in the plot from oscilloscope in Figure **6**.

When testing products in a production line, each separate product can have at least one production line. Each production line can have about 10-30 test fixtures. In an implementation, more than one transport frame, or hot emulator, can advantageously be provided for each station. The description below will discuss having two transport frames. In an exemplary operation in which the test time is 6 seconds and the device boot-up time is 10 seconds, 3 or 4 transport frames can advantageously be used with each test fixture.

In an implementation, the present application provides a system for testing first and second battery-powered electronic DUTs, including a first hot emulator arranged to receive the first DUT, and a second hot emulator arranged to receive the second DUT. The first hot emulator comprises a first battery arranged to provide power to the first DUT in a first pre-testing stage. The second hot emulator comprises a second battery arranged to provide power to the first DUT in a second pre-testing stage. An external power supply is provided, in electrical communication with the first and second hot emulators, and arranged to provide testing power to the first and second DUTs during first and second testing stages, respectively. A switching circuit is arranged to switch the testing power from the first hot emulator to the second hot emulator to begin the second testing stage in response to receiving a first test completion signal indicating the first DUT has completed the first testing stage.

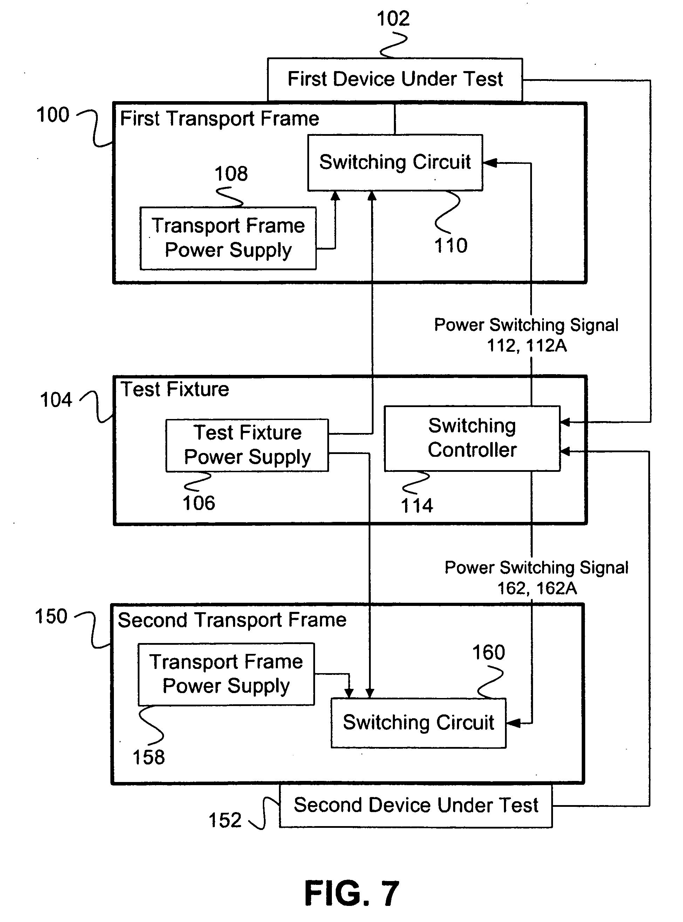

Figure **7** illustrates a block diagram of a system for testing first and second DUTs according to an implementation of the present application. The system includes first and second transport frames **100** and **130** for receiving the first and second DUTs **102** and **152**, respectively. The test fixture **104** of Figure 7 is arranged to receive the first and second transport frames **100** and **150** and to test the first and second DUTs **102** and **152**, respectively, when the first and second transport frames are engaged with the test fixture **104**. The test fixture **104** includes a test fixture power supply **106**.

The first transport frame **100** includes a first transport frame power supply 108 and a first switching circuit **110**. The second transport frame **150** includes a second transport frame power supply **158** and a second switching circuit **160**.

A switching controller **114**, in communication with the first and second switching circuits **110** and **160**, is arranged to generate first and second power switching signals **112** and **112A**, and third and further power switching signals **162** and **162A**, respectively. The switching controller **114** is also arranged to initiate power switching of power supplied by the test fixture power supply **106** from the first transport frame **100** to the second transport frame **150** to begin the second testing stage.

The first switching circuit 110 is arranged to switch from the first transport frame power supply **108** to the test fixture power supply 106 in response to receiving a first power switching signal **112** indicating satisfaction of the pre-testing condition, and arranged to switch from the test fixture power supply 106 to the first transport frame power supply **108** in response to receiving a second power switching signal indicating completion of a testing stage for the first DUT **102**.

The second switching circuit **160** is arranged to switch from the second transport frame power supply **158** to the test fixture power supply **106** in response to receiving the second power switching signal **162**.

While the switching controller **114** is shown in Figure 7 to be provided within the test fixture, the switching controller **114** can be provided in any other element of the test system, provided the other element has the appropriate electrical connections and ability to receive and generate inputs and outputs. Also, while functionality is described above and in examples as being performed by the switching controller **114**, the switching controller functionality can alternatively be performed by any other processor, computer or device in communication with the test fixture **104** and the DUTs **102** and **152**.

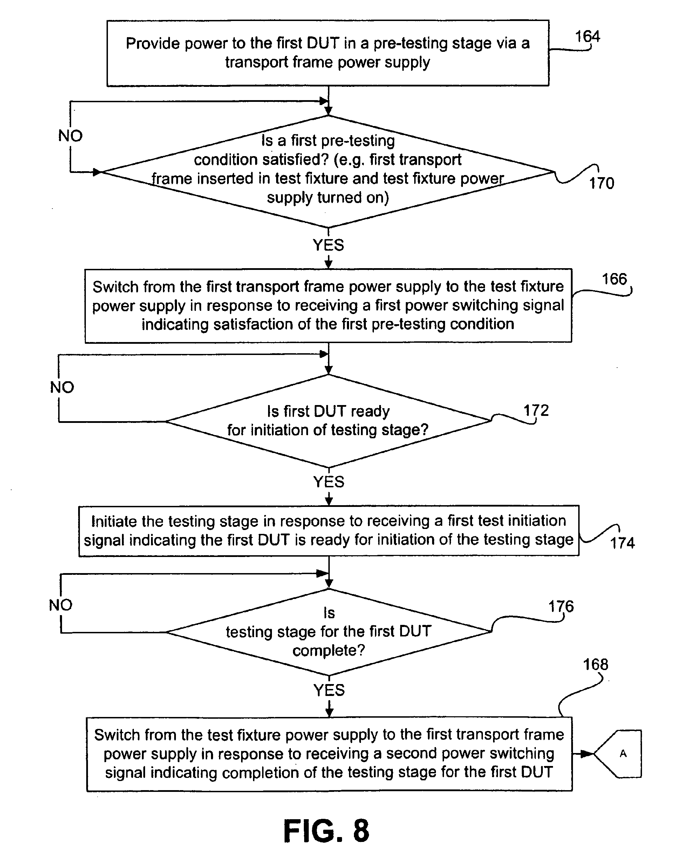

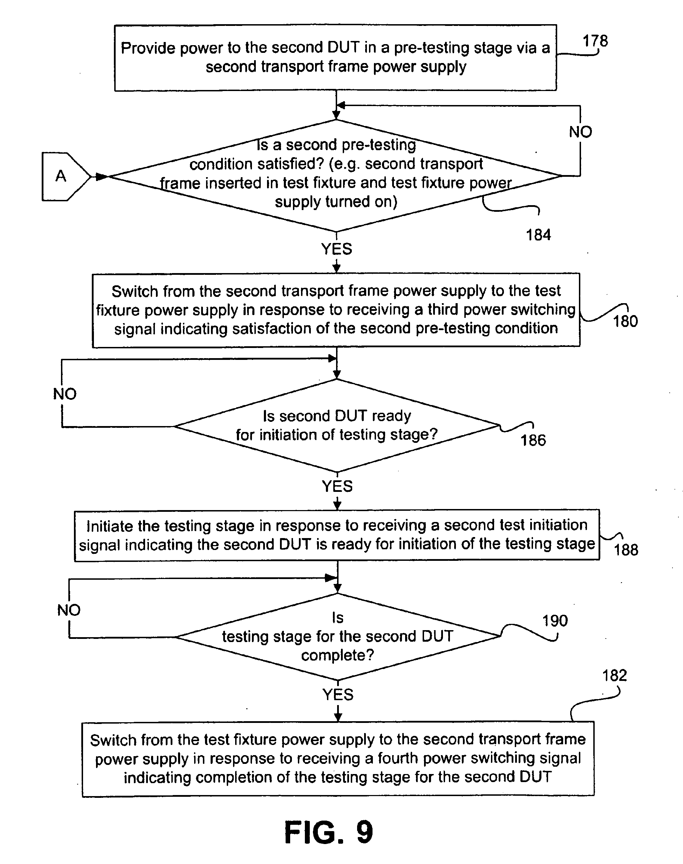

Figures **8** and **9** are flowcharts illustrating a method of power switching in a system for testing first and second DUTs according to an implementation of the present application. The system includes first and second transport frames **100** and **150** for receiving the first and second DUTs **102** and **152**, respectively, and a test fixture **104** arranged to receive the first and second transport frames **100** and **150** and to test the first and second DUTs **102** and **152**, respectively, when the first and second transport frames **100** and **150** are engaged with the test fixture **104**.

The method in Figure **8** comprises: providing power to the first DUT **102** in a pre-testing stage via a first transport frame power supply **108** when the DUT **102** is housed in the first transport frame **100** (action **164**); switching from the first transport frame power supply **108** to a test fixture power supply **106** in response to receiving a first power switching signal indicating satisfaction of a first pre-testing condition (action **166**); and switching from the test fixture power supply **106** to the first transport frame power supply **108** in response to receiving a second power switching signal indicating completion of a testing stage for the first DUT (action **168**).

The method can include determining whether the first pre-testing condition is satisfied (action **170**). This action **170** can be performed after action **164**. For example, action **170** can include determining whether the first transport frame is inserted in the test fixture, and the test fixture power supply is turned on.

The method can further include determining whether the first DUT is ready for initiation of the testing stage (action **172**). Such determination can be made on the basis of whether the current drawn from the first DUT is substantially similar-to a known targeted idle current of the first DUT. For example, action **172** can include receiving a determination that current drawn from the first DUT **102** is substantially similar to a known targeted idle current of the first DUT. Action **172** is performed after action **166**, since the current from the test fixture power supply **106** can be read or determined only after power is switched to the test fixture power supply **106** in action **166**.

The method in Figure **8** can include initiating the testing stage for the first DUT in response to receiving a first test initiation signal indicating the first DUT is ready for initiation of the testing stage (action **174**). The action **174** is performed after action **172**, and the first test initiation signal can be generated based on the determination in action **172**. The method can also include determining whether the testing stage for the first DUT is complete (action **176**). The action **176** is performed after the action **174**, and the second power switching signal received in action **168** can be generated based on the determination in action **176**.

After completion of action **168** in Figure **8**, the method proceeds to Figure **9****.** The actions in Figure **9** are similar to those in Figure **8**, and relate primarily to the second DUT **152**. Action **178** of providing power to the second DUT **152** in a pre-testing stage via a second transport frame power supply **158** can already be in process before the method proceeds from action **168** in Figure **8**.

The method in Figure **9B** comprises: switching from the second transport frame power supply **158** to a test fixture power supply **106** in response to receiving a third power switching signal indicating satisfaction of a second pre-testing condition (action **180**); and switching from the test fixture power supply **106** to the second transport frame power supply **158** in response to receiving a fourth power switching signal indicating completion of a testing stage for the second DUT **152** (action **182**).

The method can include determining whether the first pre-testing condition is satisfied (action **184**). This action **184** can be performed after action **178** and after completion of action **168** in Figure **8**. For example, action **184** can include determining whether the second transport frame is inserted in the test fixture, and the test fixture power supply is turned on.

The method can further include determining whether the second DUT is ready for initiation of the testing stage (action **186**). Such determination can be made on the basis of whether the current drawn from the second DUT is substantially similar to a known targeted idle current of the second DUT. For example, action **186** can include receiving a determination that current drawn from the second DUT **152** is substantially similar to a known targeted idle current of the second DUT. Action **186** is performed after action **180**, since the current from the test fixture power supply **106** can be read or determined only after power is switched to the test fixture power supply **106** in action **180**.

The method in Figure **9** can include initiating the testing stage for the second DUT in response to receiving a second test initiation signal indicating the second DUT is ready for initiation of the testing stage (action **188**). The action **188** is performed after action **186**, and the second test initiation signal can be generated based on the determination in action **186**. The method can also include determining whether the testing stage for the second DUT is complete (action **190**). The action **190** is performed after the action **188**, and the fourth power switching signal received in action **182** can be generated based on the determination in action **190**.

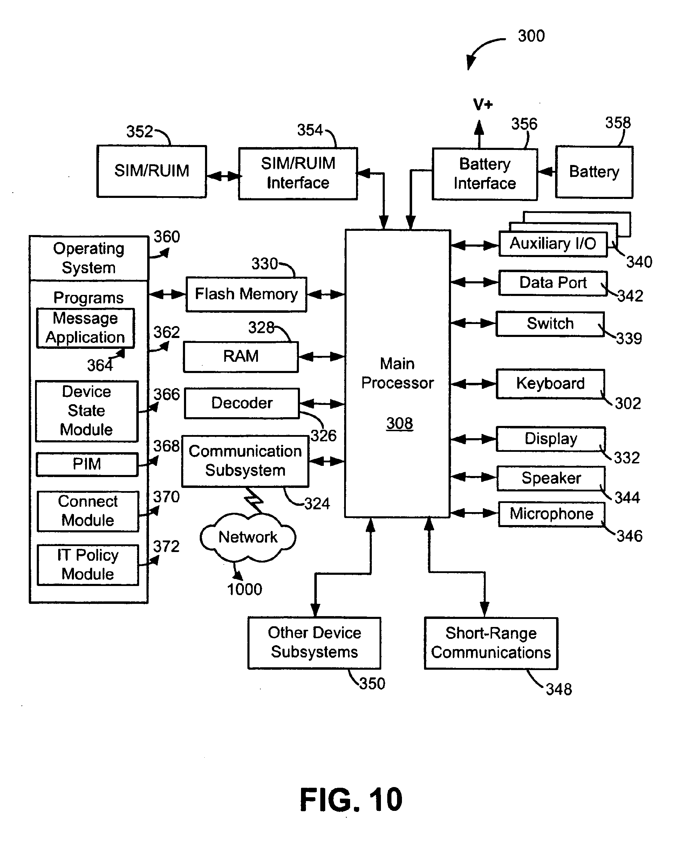

Figure **10** is a block diagram of the mobile electronic device according to one example. The following describes in further detail an exemplary mobile electronic device that can include a processor, and a computer readable memory in communication with the processor. In an implementation, the memory can store statements and instructions for execution by the processor to identify an intended hard key activation in response to receiving an indication of connection of a key circuit and based on one or more detected capacitance levels, as described and illustrated in the present application. The mobile electronic device may be a two-way communication device with advanced data communication capabilities including the capability to communicate with other mobile electronic devices or computer systems through a network of transceiver stations. The mobile electronic device may also have the capability to allow voice communication. Depending on the functionality provided by the mobile electronic device, the device may be referred to as a data messaging device, a two-way pager, a cellular telephone with data messaging capabilities, a wireless Internet appliance, or a data communication device (with or without telephony capabilities). The mobile electronic device may also be a mobile electronic device without wireless communication capabilities as a handheld electronic game device, digital photograph album, digital camera and the like.

Referring to Fig. **10**, there is shown therein a block diagram of an exemplary implementation of the mobile electronic device **300**. The mobile electronic device **300** includes a number of components such as a processor **308** that controls the overall operation of the mobile electronic device **300**. Communication functions, including data and voice communications, are performed through a communication subsystem **324**. Data received by the mobile electronic device **300** can be decompressed and decrypted by a decoder **326**, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem **324** receives messages from and sends messages to a wireless network **1000**. In this exemplary implementation of the mobile electronic device **300**, the communication subsystem **324** is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and persons skilled in the art will understand that the implementations described herein are intended to use any other suitable standards that are developed in the future. The wireless link connecting the communication subsystem **324** with the wireless network **1000** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **1000** associated with the mobile electronic device 300 is a GSM/GPRS wireless network in one exemplary implementation, other wireless networks may also be associated with the mobile electronic device **300** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor **308** also interacts with additional subsystems such as a Random Access Memory (RAM) **328**, a flash memory **330**, a display **332**, the keyboard **302**, a switch **339**, an auxiliary input/output (I/O) subsystem **340**, a data port **342**, a speaker **344**, a microphone **346**, short-range communications **348**, and other device subsystems **350**. The flash memory **330** and RAM **328** are examples of a computer readable memory in communication with the processor **308.** The memory can store statements and instructions for execution by the processor to perform the method of identifying an intended hard key activation in response to receiving an indication of connection of a key circuit and based on one or more detected capacitance levels, as described and illustrated in the present application

Some of the subsystems of the mobile electronic device **300** perform communication-related functions, whereas other subsystems may provide "resident" or on-device functions. By way of example, the keyboard **302** may be used for both communication-related functions, such as entering a text message for transmission over the network 1000, and device-resident functions such as a calculator or task list.

The mobile electronic device **300** can send and receive communication signals over the wireless network **1000** after network registration or activation procedures have been completed. Network access is associated with a subscriber or user of the mobile electronic device **300.** To identify a subscriber according to the present implementation, the mobile electronic device **300** uses a SIM/RUIM card **352** (i.e. Subscriber Identity Module or a Removable User Identity Module) inserted into a SIM/RUIM interface **354** for communication with a network such as the network **1000.** The SIM/RUIM card **352** is one type of a conventional "smart card" that can be used to identify a subscriber of the mobile electronic device **300** and to personalize the mobile electronic device **300**, among other things. In the present implementation the mobile electronic device **300** is not fully operational for communication with the wireless network **1000** without the SIM/RUIM card **352**. By inserting the SIM/RUIM card **352** into the SIM/RUIM interface **354**, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card **352** includes a processor and memory for storing information. Once the SIM/RUIM card **352** is inserted into the SIM/RUIM interface **354**, the SIM/RUIM card **352** is coupled to the processor **308**. In order to identify the subscriber, the SIM/RUIM card **352** can include some user parameters such as an International Mobile Subscriber Identity (IMSI). An advantage of using the SIM/RUIM card **352** is that a subscriber is not necessarily bound by any single physical mobile electronic device. The SIM/RUIM card **352** may store additional subscriber information for a mobile electronic device as well, including datebook (or calendar) information and recent call information. Alternatively, user identification information can also be programmed into the flash memory **330**. The mobile electronic device **300** can also be enabled to receive additional memory cards. For example, memory card slots (not shown) can be provided in the mobile electronic device **300** to receive such cards.

The mobile electronic device **300** is a battery-powered device and includes a battery interface **356** for receiving a battery pack containing one or more rechargeable battery cells **358**, and associated control circuitry (not shown) that, in some implementations, can interface with the battery interface **356**. The battery pack has a form factor and contact arrangement suited to the particular mobile electronic device. In at least some implementations, the battery **358** can be a smart battery with an embedded microprocessor. The battery interface **356** is coupled to a regulator (not shown), which assists the battery **358** in providing power V+ to the mobile electronic device **300**. Although current technology makes use of a battery, future technologies such as micro fuel cells may provide the power to the mobile electronic device **300**.

The mobile electronic device **300** also includes an operating system **360** and software components **362** which are described in more detail below. The operating system **360** and the software components **362** that are executed by the processor **308** are typically stored in a persistent store such as the flash memory **330**, which may alternatively be a read-only memory (ROM) or similar storage element (not shown). Those skilled in the art will appreciate that portions of the operating system **360** and the software components **362**, such as specific software applications **364**, **366**, **368**, **370** and **372**, or parts thereof, may be temporarily loaded into a volatile store such as the RAM **328**. Other software components can also be included, as is well known to those skilled in the art.

The subset of software components **362** that control basic device operations, including data and voice communication applications, will normally be installed on the mobile electronic device **320** during its manufacture. Other software applications include a message application **364** that can be any suitable software program that allows a user of the mobile electronic device **300** to send and receive electronic messages. Various alternatives exist for the message application **364** as is well known to those skilled in the art. Messages that have been sent or received by the user are typically stored in the flash memory **330** of the mobile electronic device **300** or some other suitable storage element in the mobile electronic device **300**. In at least some implementations, some of the sent and received messages may be stored remotely from the device **300** such as in a data store of an associated host system that the mobile electronic device **300** communicates with.

The software components **362** can further include a device state module **366**, a Personal Information Manager (PIM) **368**, and other suitable modules (not shown). The device state module **366** provides persistence, i.e. the device state module **366** ensures that important device data is stored in persistent memory, such as the flash memory **330**, so that the data is not lost when the mobile electronic device **300** is turned off or loses power.

The PIM **368** includes functionality for organizing and managing data items of interest to the user, such as, but not limited to, e-mail, contacts, calendar events, voice mails, appointments, and task items. The PIM **368** has the ability to send and receive data items via the wireless network **1000**. PIM data items may be seamlessly integrated, synchronized, and updated via the wireless network **1000** with the mobile electronic device subscriber's corresponding data items stored or associated, or both, with a host computer system. This functionality creates a mirrored host computer on the mobile electronic device **330** with respect to such items. This can be particularly advantageous when the host computer system is the mobile electronic device subscriber's office computer system.

The software components **362** also include a connect module **370**, and an information technology (IT) policy module **372**. The connect module **370** implements the communication protocols that are required for the mobile electronic device **300** to communicate with the wireless infrastructure and any host system, such as an enterprise system, that the mobile electronic device **300** is authorized to interface with.

The connect module **370** includes a set of APIs that can be integrated with the mobile electronic device **300** to allow the mobile electronic device **300** to use any number of services associated with the enterprise system. The connect module **370** allows the mobile electronic device **300** to establish an end-to-end secure, authenticated communication pipe with the host system. A subset of applications for which access is provided by the connect module **370** can be used to pass IT policy commands from the host system to the mobile electronic device **300**. This can be done in a wireless or wired manner. These instructions can then be passed to the IT policy module 372 to modify the configuration of the device **300**. Alternatively, in some cases, the IT policy update can also be done over a wired connection.

Other types of software applications can also be installed on the mobile electronic device **300**. These software applications can be third party applications, which are added after the manufacture of the mobile electronic device **300**. Examples of third party applications include games, calculators, utilities, etc.

The additional applications can be loaded onto the mobile electronic device **300** through at least one of the wireless network 1000, the auxiliary I/O subsystem **340**, the data port **342**, the short-range communications subsystem **248**, or any other suitable device subsystem **350**. This flexibility in application installation increases the functionality of the mobile electronic device **300** and may provide enhanced on-device functions, communication-related functions, or both. For example, secure communication applications may enable electronic commerce functions and other such financial transactions to be performed using the mobile electronic device **300**.

The data port **342** enables a subscriber to set preferences through an external device or software application and extends the capabilities of the mobile electronic device **300** by providing for information or software downloads to the mobile electronic device **300** other than through a wireless communication network. The alternate download path may, for example, be used to load an encryption key onto the mobile electronic device **300** through a direct and thus reliable and trusted connection to provide secure device communication.

The data port **342** can be any suitable port that enables data communication between the mobile electronic device **300** and another computing device. The data port **342** can be a serial or a parallel port. In some instances, the data port **342** can be a USB port that includes data lines for data transfer and a supply line that can provide a charging current to charge the battery **358** of the mobile electronic device **300.**

The short-range communications subsystem **348** provides for communication between the mobile electronic device **300** and different systems or devices, without the use of the wireless network **1000**. For example, the short-range communications subsystem **348** may include an infrared device and associated circuits and components for short-range communication. Examples of short-range communication standards include standards developed by the Infrared Data Association (IrDA), Bluetooth, and the 802.11 family of standards developed by IEEE.

Synchronization of files and data between the mobile electronic device **300** and another computing device can be achieved over the wireless network **1000**, through the short-range communications system **348**, or through a direct connection between the data port **342** of the mobile electronic device **300** and the other computing device. Synchronization causes the most recent version of files and data to be mirrored on either the mobile electronic device or the other computing device. As used herein, synchronization also refers to the downloading or uploading of pre-selected files from one device to the other. Synchronization of files and data can be initiated by the user of the device whenever a suitable connection between the mobile electronic device **300** and another computing device, such as a home computer, is detected, or can occur automatically when a connection is detected. A synchronization application, stored in the mobile electronic device **300** or the other computing device, or both, can determine the file and data types to be synchronized, the frequency of synchronization, and other parameters, appropriate to the particular synchronization algorithm implemented by the synchronization application.

In use, a received signal such as a text message, an e-mail message, or web page download is processed by the communication subsystem **324** and input to the processor **308**. The processor **308** then processes the received signal for output to the display **332** or alternatively to the auxiliary I/O subsystem **340**. A subscriber may also compose data items, such as e-mail messages, for example, using a touch-sensitive overlay (not shown) on the display **332** that is part of a touch screen display, and possibly the auxiliary I/O subsystem **340**. The auxiliary I/O subsystem **340** may include devices such as: a mouse, track ball, optical navigation module, infrared fingerprint detector, or a roller wheel with dynamic button pressing capability. A composed item may be transmitted over the wireless network **1000** through the communication subsystem **324**.

For voice communications, the overall operation of the mobile electronic device **300** is substantially similar, except that the received signals are output to the speaker **344**, and signals for transmission are generated by the microphone **346**. Alternative voice or audio I/O subsystems, such as a voice message recording subsystem, can also be implemented on the mobile electronic device **300** Although voice or audio signal output is accomplished primarily through the speaker **344**, the display **332** can also be used to provide additional information such as the identity of a calling party, duration of a voice call, or other voice call related information.

In the preceding description, for purposes of explanation, numerous details are set forth in order to provide a thorough understanding of the implementations described herein. However, one skilled in the art will understand that these specific details are not required in order to practice the implementations. In other instances, well-known electrical structures and circuits are shown in block diagram form in order not to obscure the implementations. For example, specific details are not provided as to whether the implementations described herein are implemented as a software routine, hardware circuit, firmware, or a combination thereof.

Implementations described herein can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform actions in a method according to an implementation described herein. Those of ordinary skill in the art will appreciate that other instructions and operations necessary to implement the described implementations can also be stored on the machine-readable medium. Software running from the machine-readable medium can interface with circuitry to perform the described tasks.

The above-described implementations are intended to be examples only. Alterations, modifications and variations can be effected to the particular implementations by those of skill in the art without departing from the scope, which is defined solely by the claims appended hereto.

## Claims

1. A transport frame (100) to test a battery-powered electronic device-under-test 'DUT' (102) in a test fixture (104), the test fixture arranged to receive the transport frame and to test the DUT when the transport frame is engaged with the test fixture, the transport frame comprising:
a transport frame power supply (108) arranged to provide power to the DUT (102) in a pre-testing stage; and
a switching circuit (110) arranged to switch from the transport frame power supply (108) to a test fixture power supply (106) provided in the test fixture (104) in response to receiving a first power switching signal (112) indicating satisfaction of a pre-testing condition, and arranged to switch from the test fixture power supply (106) to the transport frame power supply (108) in response to receiving a second power switching signal (112A) indicating completion of a testing stage.

2. The transport frame of claim 1 further comprising a switching controller (114) to control power switching between the transport frame power supply (108) and the test fixture power supply (106), the switching controller (114) being arranged to generate the first and second power switching signals (112, 112A).

3. The transport frame of claim 2 wherein the switching controller (114) comprises a machine readable medium storing statements and instructions for execution by a processor to control power switching between the transport frame power supply (108) and the test fixture power supply (106).

4. The transport frame of any preceding claim wherein the switching circuit comprises a load switch (120).

5. The transport frame of any preceding claim wherein the switch from the transport frame power supply to the test fixture power supply causes a voltage drop, and wherein the switching circuit is arranged such that the voltage drop is below a reboot tolerance for the DUT (102).

6. A method of power switching to test a battery-powered electronic device-under-test 'DUT' (102), using a system comprising a transport frame (100) and a test fixture (104) arranged to receive the transport frame (100) and to test the DUT (102) when the transport frame (100) is engaged with the test fixture (104), the method comprising:
providing power to the DUT in a pre-testing stage via a transport frame power supply when the DUT is housed in the transport frame (124);
switching from the transport frame power supply to a test fixture power supply in response to a first power switching signal indicating satisfaction of the pre-testing condition (126); and
switching from the test fixture power supply to the transport frame power supply in response to receiving a second power switching signal indicating completion of the testing stage (128).

7. The method of claim 6 wherein the first power switching signal (112A) comprises an indication that the transport frame is inserted in the test fixture and the test fixture power supply is turned on.

8. The method of claim 6 or claim 7 further comprising determining whether the pre-testing condition is satisfied (130).

9. The method of any one of claims 6 to 8 further comprising initiating the testing stage in response to receiving a test initiation signal indicating the DUT is ready for initiation of the testing stage (134).

10. The method of claim 9 wherein the test initiation signal is generated based on a determination that current drawn from the DUT is substantially similar to a known targeted idle current of the DUT.

11. A computer-readable medium storing statements and instructions for execution by a processor to perform the method of any one of claims 6 to 10.

12. A system to test a battery-powered electronic device-under-test 'DUT' (102), the system comprising:
a transport frame (100) arranged to receive the DUT (102);
a transport frame power supply (108) arranged to provide power to the DUT (102) in a pre-testing stage;
a test fixture (104) arranged to receive the transport frame (100) and to test the DUT (102) when the transport frame (100) is engaged with the test fixture (104);
a test fixture power supply (106) arranged to provide power to the DUT after satisfaction of a pre-testing condition; and
a switching circuit (110) arranged to switch from the transport frame power supply (108) to the test fixture power supply (106) in response to receiving a first power switching signal (112) indicating satisfaction of the pre-testing condition, and arranged to switch from the test fixture power supply (106) to the transport frame power supply (108) in response to receiving a second power switching signal (112A) indicating completion of the testing stage.

13. The system of claim 12 wherein the test fixture further comprises a charging circuit (116) arranged to charge the test fixture power supply.

14. A testing system to test first and second battery-powered electronic devices-under-test 'DUTs' (102, 152), the system comprising:
first and second transport frames (100, 150) arranged to receive the first and second DUTs (102, 152),
the first transport frame (100) including a first transport frame power supply (108) and a first switching circuit (110),
the second transport frame (150) including a second transport frame power supply (158) and a second switching circuit (160);
a test fixture (104) arranged to receive the first and second transport frames (110, 150) and to test the first and second DUTs (102, 152), respectively, when the first and second transport frames (100, 150) are engaged with the test fixture (104), the test fixture including a test fixture power supply (106); and
a switching controller (114) in communication with the first and second switching circuits (110,160) and arranged to generate first and second power switching signals (112, 112A);
the first switching circuit (110) arranged to switch from the first transport frame power supply (108) to the test fixture power supply (106) in response to receiving a first power switching signal (112) indicating satisfaction of the pre-testing condition, and arranged to switch from the test fixture power supply (106) to the first transport frame power supply (108) in response to receiving a second power switching signal (112A) indicating completion of a testing stage for the first DUT,
the switching controller (114) arranged to initiate power switching of power supplied by the test fixture power supply (106) from the first transport frame (100) to the second transport frame (150) to begin a testing stage for the second DUT (150),
the second switching circuit (160) arranged to switch from the second transport frame power supply (158) to the test fixture power supply (106) in response to receiving a third power switching signal (162) indicating satisfaction of a second pre-testing condition, and arranged to switch from the test fixture power supply (106) to the second transport frame power supply (158) in response to receiving a fourth power switching signal (16A) indicating completion of the testing stage for the second DUT (152),
the switching controller arranged to generate the third and fourth power switching signals (162, 162A).

15. A method of power switching to test first and second battery-powered electronic devices-under-test `DUTs' (102, 152), using a system comprising first and second transport frames (100, 150) arranged to receive the first and second DUTs (102, 152), respectively, and a test fixture (104) arranged to receive the first and second transport frames (100, 150) and to test the first and second DUTs (102, 152), respectively, when the first and second transport frames (100, 152) are engaged with the test fixture (104), the method comprising:
providing power to the first DUT in a pre-testing stage via a first transport frame power supply when the DUT is housed in the first transport frame (164);
switching from the first transport frame power supply to a test fixture power supply in response to receiving a first power switching signal indicating satisfaction of a first pre-testing condition (166);
switching from the test fixture power supply to the first transport frame power supply in response to receiving a second power switching signal indicating completion of a testing stage for the first DUT (168);
switching from the second transport frame power supply to a test fixture power supply in response to receiving a third power switching signal indicating satisfaction of a second pre-testing condition (180); and
switching from the test fixture power supply to the second transport frame power supply in response to receiving a fourth power switching signal indicating completion of a testing stage for the second DUT (182).

## Patentansprüche

1. Transportrahmen (100) zum Prüfen einer batteriebetriebenen elektronischen Vorrichtung unter Prüfung "Prüfling" (102) in einer Prüfhalterung (104), wobei die Prüfhalterung dazu ausgelegt ist, den Transportrahmen aufzunehmen und den Prüfling zu prüfen, wenn sich der Transportrahmen mit der Prüfhalterung in Eingriff befindet, wobei der Transportrahmen Folgendes aufweist:
eine Transportrahmen-Stromversorgung (108), die dazu ausgelegt ist, den Prüfling (102) in einer Vorprüfphase mit Strom zu beliefern, und
einem Umschalt-Schaltkreis (110), der dazu ausgelegt ist, als Reaktion auf ein Empfangen eines ersten Stromumschaltsignals (112), das eine Erfüllung einer Vorprüfungsbedingung anzeigt, von der Transportrahmen-Stromversorgung (108) auf die Prüfhalterungs-Stromversorgung (106) umzuschalten, die in der Prüfhalterung (104) bereitgestellt ist, und der dazu ausgelegt ist, als Reaktion auf das Empfangen eines zweiten Stromumschaltsignals (112A), das einen Abschluss einer Prüfphase anzeigt, von der Prüfhalterungs-Stromversorgung (106) auf die Transportrahmen-Stromversorgung (108) umzuschalten.

2. Der Transportrahmen nach Anspruch 1, ferner mit einer Umschaltsteuerung (114) zum Steuern des Stromumschaltens zwischen der Transportrahmen-Stromversorgung (108) und der Prüfhalterungs-Stromversorgung (106), wobei die Umschaltsteuerung (114) dazu ausgelegt ist, das erste und das zweite Stromumschaltsignal (112, 112A) zu erzeugen.

3. Der Transportrahmen nach Anspruch 2, wobei die Umschaltsteuerung (114) ein maschinenlesbares Medium aufweist, das Aussagen und Befehle zum Ausführen durch einen Prozessor speichert, um die Stromumschaltung zwischen der Transportrahmen-Stromversorgung (108) und der Prüfhalterungs-Stromversorgung (106) zu steuern.

4. Der Transportrahmen nach einem der vorhergehenden Ansprüche, wobei der Umschalt-Schaltkreis einen Lastschalter (120) aufweist.

5. Der Transportrahmen nach einem der vorhergehenden Ansprüche, wobei das Schalten von der Transportrahmen-Stromversorgung auf die Prüfhalterungs-Stromversorgung einen Spannungsabfall verursacht und wobei der Umschalt-Schaltkreis so ausgelegt ist, dass der Spannungsabfall unter einer Neustarttoleranz für den Prüfling (102) ist.

6. Ein Verfahren zum Stromumschalten, um eine batteriebetriebene elektronische Vorrichtung unter Prüfung "Prüfling" (102) unter Verwendung eines Systems zu prüfen, das einen Transportrahmen (100) und eine Prüfhalterung (104) aufweist, die dazu ausgelegt ist, den Transportrahmen (100) aufzunehmen und den Prüfling (102) zu prüfen, wenn sich der Transportrahmen (100) mit der Prüfhalterung (104) in Eingriff befindet, wobei das Verfahren Folgendes aufweist:
Liefern von Strom an den Prüfling in einer Vorprüfphase über eine Transportrahmen-Stromversorgung, wenn der Prüfling in dem Transportrahmen (124) untergebracht ist,
Umschalten von der Transportrahmen-Stromversorgung auf eine Prüfhalterungs-Stromversorgung als Reaktion auf ein erstes Stromumschaltsignal, das eine Erfüllung der Vorprüfungsbedingung (126) anzeigt, und
Umschalten von der Prüfhalterungs-Stromversorgung auf die Transportrahmen-Stromversorgung als Reaktion auf das Empfangen eines zweiten Stromumschaltsignals, das einen Abschluss der Prüfphase (128) anzeigt.

7. Verfahren nach Anspruch 6, wobei das erste Stromumschaltsignal (112A) eine Angabe aufweist, dass der Transportrahmen in der Prüfhalterung eingeführt ist und die Prüfhalterungs-Stromversorgung angestellt ist.

8. Verfahren nach Anspruch 6 oder 7, ferner mit einem Bestimmen (130), ob die Vorprüfungsbedingung erfüllt ist.

9. Verfahren nach einem der Ansprüche 6 bis 8, ferner mit einem Einleiten der Prüfphase als Reaktion auf ein Empfangen eines Prüfungseinleitsignals, das anzeigt, dass der Prüfling für die Einleitung der Prüfphase (134) bereit ist.

10. Verfahren nach Anspruch 9, wobei das Prüfeinleitsignal auf Grundlage einer Bestimmung erzeugt wird, dass der von dem Prüfling gezogene Strom einem bekannten Zielruhestrom des Prüflings im Wesentlichen ähnlich ist.

11. Computerlesbares Medium, das Aussagen und Befehle zum Ausführen durch einen Prozessor speichert, um das Verfahren nach einem der Ansprüche 6 bis 10 durchzuführen.

12. System zum Prüfen einer batteriebetriebenen elektronischen Vorrichtung unter Prüfung "Prüfling" (102), wobei das System Folgendes aufweist:
einen Transportrahmen (100), der dazu ausgelegt ist, den Prüfling (102) aufzunehmen,
eine Transportrahmen-Stromversorgung (108), die dazu ausgelegt ist, den Prüfling (102) in einer Vorprüfphase mit Strom zu beliefern,
eine Prüfhalterung (104), die dazu ausgelegt ist, den Transportrahmen (100) aufzunehmen und den Prüfling (102) zu prüfen, wenn sich der Transportrahmen (100) mit der Prüfhalterung (104) in Eingriff befindet;
eine Prüfhalterungs-Stromversorgung (106), die dazu ausgelegt ist, den Prüfling nach Erfüllung einer Vorprüfbedingung mit Strom zu beliefern, und
einem Umschalt-Schaltkreis (110), der dazu ausgelegt ist, als Reaktion auf ein Empfangen eines ersten Stromumschaltsignals (112), das eine Erfüllung einer Vorprüfungsbedingung anzeigt, von der Transportrahmen-Stromversorgung (108) auf die Prüfhalterungs-Stromversorgung (106) umzuschalten, und der dazu ausgelegt ist, als Reaktion auf das Empfangen eines zweiten Stromumschaltsignals (112A), das einen Abschluss der Prüfphase anzeigt, von der Prüfhalterungs-Stromversorgung (106) auf die Transportrahmen-Stromversorgung (108) umzuschalten.

13. System nach Anspruch 12, wobei die Prüfhalterung ferner einen Ladeschaltkreis (116) aufweist, der dazu ausgelegt ist, die Prüfhalterungs-Stromversorgung aufzuladen.

14. Prüfsystem zum Prüfen einer ersten und einer zweiten batteriebetriebenen elektronischen Vorrichtung unter Prüfung "Prüfling" (102, 152), wobei das System Folgendes aufweist:
einen ersten und einen zweiten Transportrahmen (100,150), der dazu ausgelegt ist, den ersten bzw. den zweiten Prüfling (102, 152) aufzunehmen,
wobei der erste Transportrahmen (100) eine erste Transportrahmen-Stromversorgung (108) und einen ersten Umschalt-Schaltkreis (110) enthält,
wobei der zweite Transportrahmen (150) eine zweite Transportrahmen-Stromversorgung (158) und einen zweiten Umschalt-Schaltkreis (160) enthält,
eine Prüfhalterung (104), die dazu ausgelegt ist, jeweils den ersten und den zweiten Transportrahmen (110, 150) aufzunehmen und den ersten bzw. den zweiten Prüfling (102, 152) zu prüfen, wenn sich der erste bzw. der zweite Transportrahmen (100, 150) mit der Prüfhalterung (104) in Eingriff befindet, wobei die Prüfhalterung eine Prüfhalterungs-Stromversorgung (106) enthält, und
eine Umschaltsteuerung (114) in Kommunikation mit dem ersten bzw. dem zweiten Umschalt-Schaltkreis (110, 160), die dazu ausgelegt ist, das erste und das zweite Stromumschaltsignal (112, 112A) zu erzeugen,
wobei der erste Umschalt-Schaltkreis (110) dazu ausgelegt ist, als Reaktion auf ein Empfangen eines ersten Stromumschaltsignals (112), das eine Erfüllung der Vorprüfbedingung anzeigt, von der ersten Transportrahmen-Stromversorgung (108) auf die Prüfhalterungs-Stromversorgung (106) umzuschalten, und dazu ausgelegt ist, als Reaktion auf das Empfangen eines zweiten Stromumschaltsignals (112A), das einen Abschluss einer Prüfphase für den ersten Prüfling anzeigt, von der Prüfhalterungs-Stromversorgung (106) auf die erste Transportrahmen-Stromversorgung (108) umzuschalten,
die Umschaltsteuerung (114) dazu ausgelegt ist, eine Stromumschaltung des durch die Prüfhalterungs-Stromversorgung (106) gelieferten Stroms vom ersten Transportrahmen (100) auf den zweiten Transportrahmen (150) einzuleiten, um eine Prüfphase für den zweiten Prüfling beginnen,
der zweite Umschalt-Schaltkreis (160) dazu ausgelegt ist, als Reaktion auf das Empfangen eines dritten Stromumschaltsignals (162), die eine Erfüllung einer zweiten Vorprüfungsbedingung anzeigt, von der zweiten Transportrahmen-Stromversorgung (158) auf die Prüfhalterungs-Stromversorgung (106) umzuschalten, und dazu ausgelegt ist, als Reaktion auf das Empfangen eines vierten Stromumschaltsignals (16A), das einen Abschluss der Prüfphase für den zweite Prüfling (152) anzeigt, von der Prüfhalterungs-Stromversorgung (106) auf die zweite Transportrahmen Stromversorgung (158) umzuschalten, und
die Umschaltsteuerung dazu ausgelegt ist, das dritte und das vierte Stromumschaltsignal (162, 162A) zu erzeugen.

15. Verfahren zum Stromumschalten, um eine erste und eine zweite batteriebetriebene elektronische Vorrichtung unter Prüfung "Prüflinge" (102, 152) unter Verwendung eines Systems zu prüfen, das einen ersten und einen zweiten Transportrahmen (100, 150), der dazu ausgelegt ist, den ersten bzw. den zweiten Prüfling (102, 152) jeweils aufzunehmen, und eine Prüfhalterung (104) aufweist, die dazu ausgelegt ist, jeweils den ersten und den zweiten Transportrahmen (110, 150) aufzunehmen und den ersten bzw. den zweiten Prüfling (102, 152) zu prüfen, wenn sich der erste bzw. der zweite Transportrahmen (100, 150) mit der Prüfhalterung (104) in Eingriff befindet, wobei das Verfahren Folgendes aufweist:
Liefern (164) von Strom an den ersten Prüfling in einer Vorprüfphase über eine erste Transportrahmen-Stromversorgung, wenn der Prüfling in dem ersten Transportrahmen untergebracht ist;
Umschalten (166) von der ersten Transportrahmen-Stromversorgung auf eine Prüfhalterungs-Stromversorgung als Reaktion auf ein Empfangen eines ersten Stromumschaltsignals, das eine Erfüllung einer ersten Vorprüfbedingung anzeigt,
Umschalten (168) von der Prüfhalterungs-Stromversorgung auf die erste Transportrahmen-Stromversorgung als Reaktion auf das Empfangen eines zweiten Stromumschaltsignals, das einen Abschluss einer Prüfphase für den ersten Prüfling anzeigt,
Umschalten (180) von der zweiten Transportrahmen-Stromversorgung auf eine Prüfhalterungs-Stromversorgung als Reaktion auf ein Empfangen eines dritten Stromumschaltsignals, das eine Erfüllung einer zweiten Vorprüfungsbedingung anzeigt, und
Umschalten (182) von der Prüfhalterungs-Stromversorgung auf die zweite Transportrahmen-Stromversorgung als Reaktion auf das Empfangen eines vierten Stromumschaltsignals, das den Abschluss einer Prüfphase für den zweiten Prüfling anzeigt.

## Revendications

1. Châssis de transport (100) pour tester un dispositif devant être testé (102) (DUT pour "Device-Under-Test"), électronique, alimenté par batterie dans un montage de test (104), le montage de test étant agencé pour recevoir le châssis de transport et pour tester le DUT lorsque le châssis de transport est en prise avec le montage de test, le châssis de transport comprenant :
une alimentation (108) de châssis de transport agencée pour fournir du courant au DUT (102) dans une phase de pré-test ; et
un circuit (110) de commutation agencé pour commuter de l'alimentation (108) de châssis de transport à une alimentation (106) de montage de test prévue dans le montage de test (104) en réponse à la réception d'un premier signal (112) de commutation de courant indiquant la satisfaction d'une condition de pré-test, et agencé pour commuter de l'alimentation (106) de montage de test à l'alimentation (108) de châssis de transport en réponse à la réception d'un deuxième signal (112A) de commutation de courant indiquant l'achèvement d'une phase de test.

2. Châssis de transport selon la revendication 1, comprenant en outre un régisseur (114) de commutation pour commander la commutation de courant entre l'alimentation (108) de châssis de transport et l'alimentation (106) de montage de test, le régisseur (114) de commutation étant agencé pour engendrer les premier et deuxième signaux (112, 112A) de commutation de courant.

3. Châssis de transport selon la revendication 2, dans lequel le régisseur (114) de commutation comprend un support lisible en machine mémorisant des propositions et des instructions pour exécution par un processeur pour commander une commutation de courant entre l'alimentation (108) de châssis de transport et l'alimentation (106) de montage de test.

4. Châssis de transport selon l'une quelconque des revendications précédentes, dans lequel le circuit de commutation comprend un commutateur de charge (120).

5. Châssis de transport selon l'une quelconque des revendications précédentes, dans lequel la commutation de l'alimentation de châssis de transport à l'alimentation de montage de test provoque une chute de tension, et dans lequel le circuit de commutation est agencé de façon que la chute de tension soit au-dessous d'une tolérance de réinitialisation pour le DUT (102).

6. Procédé de commutation de courant pour tester un dispositif à tester 'DUT' (102), électronique, alimenté par batterie, utilisant un système comprenant un châssis de transport (100) et un montage de test (104) agencé pour recevoir le châssis de transport (100) et pour tester le DUT (102) lorsque le châssis de transport est en prise avec le montage de test (104), le procédé comprenant :
la fourniture de courant au DUT dans une phase de pré-test via une alimentation de châssis de transport lorsque le DUT est logé dans le châssis de transport (124) ;
la commutation de l'alimentation de châssis de transport à une alimentation de montage de test en réponse à un premier signal de commutation de courant indiquant la satisfaction de la condition (126) de pré-test ; et
la commutation de l'alimentation de montage de test à l'alimentation de châssis de transport en réponse à la réception d'un deuxième signal de commutation de courant indiquant l'achèvement de la phase de test (128).

7. Procédé selon la revendication 6, dans lequel le premier signal (112A) de commutation de courant comprend une indication que le châssis de transport est inséré dans le montage de test et que l'alimentation de montage de test est mise en fonction.

8. Procédé selon la revendication 6 ou la revendication 7, comprenant en outre la détermination de ce que la condition de pré-test est ou non satisfaite (130).

9. Procédé selon l'une quelconque des revendications 6 à 8, comprenant en outre le lancement de la phase de test en réponse à la réception d'un signal de lancement indiquant que le DUT est prêt pour le lancement de la phase de test (134).

10. Procédé selon la revendication 9, dans lequel le signal de lancement de test est engendré en se basant sur une détermination de ce que le courant tiré du DUT est pratiquement similaire à un courant cible connu au repos du DUT.

11. Support lisible par processeur mémorisant des propositions et des instructions pour exécution par un processeur pour mettre en oeuvre le procédé selon l'une quelconque des revendications 6 à 10.

12. Système pour tester un dispositif à tester 'DUT' (102), électronique, alimenté par batterie, le système comprenant :
un châssis de transport (100) agencé pour recevoir le DUT (102) ;
une alimentation (108) de châssis de transport agencée pour fournir du courant au DUT (102) dans une phase de pré-test ;
un montage de test (104) agencé pour recevoir le châssis de transport (100) et pour tester le DUT (102) lorsque le châssis de transport (100) est en prise avec le montage de test (104) ;
une alimentation (106) de montage de test agencée pour fournir du courant au DUT après satisfaction d'une condition de pré-test ; et
un circuit (110) de commutation agencé pour commuter de l'alimentation (108) de châssis de transport à l'alimentation (106) de montage de test en réponse à la réception d'un premier signal (112) de commutation de courant indiquant la satisfaction de la condition de pré-test, et agencé pour commuter de l'alimentation (106) de montage de test à l'alimentation (108) de châssis de transport en réponse à la réception d'un deuxième signal (112A) de commutation de courant indiquant l'achèvement de la phase de test.

13. Système selon la revendication 12, dans lequel le montage de test comprend en outre un circuit de charge (116) agencé pour charger l'alimentation de montage de test.

14. Système de test pour tester des premier et second dispositifs à tester 'DUT' (102, 152), électroniques, alimentés par batterie, le système comprenant :
des premier et second châssis de transport (100, 150) agencés pour recevoir les premier et second DUT (102, 152),
le premier châssis de transport (100) incluant une première alimentation (108) de châssis de transport et un premier circuit (110) de commutation,
le second châssis de transport (150) incluant une seconde alimentation (158) de châssis de transport et un second circuit (160) de commutation ;
un montage de test (104) agencé pour recevoir les premier et second châssis de transport (110, 150) et pour tester les premier et second DUT (102, 152), respectivement, lorsque les premier et second châssis de transport (100, 150) sont en prise avec le montage de test (104), le montage de test incluant une alimentation (106) de montage de test ; et
un régisseur (114) de commutation en communication avec les premier et second circuits (110, 160) de commutation et agencé pour engendrer des premier et deuxième signaux (112, 112A) de commutation de courant,
le premier circuit (110) de commutation étant agencé pour commuter de la première alimentation (108) de châssis de transport à l'alimentation (106) de montage de test en réponse à la réception d'un premier signal (112) de commutation de courant indiquant la satisfaction de la condition de pré-test, et agencé pour commuter de l'alimentation (106) de montage de test à la première alimentation (108) de châssis de transport en réponse à la réception d'un deuxième signal (112A) de commutation de courant indiquant l'achèvement d'une phase de test pour le premier DUT,
le régisseur (114) de commutation étant agencé pour lancer la commutation de courant du courant fourni par l'alimentation (106) de montage de test du premier châssis de transport (100) au second châssis de transport (150) pour commencer une phase de test pour le second DUT (150),
le second circuit (160) de commutation étant agencé pour commuter de la seconde alimentation (158) de châssis de transport à l'alimentation (106) de montage de test en réponse à la réception d'un troisième signal (162) de commutation de courant indiquant la satisfaction d'une seconde condition de pré-test, et agencé pour commuter de l'alimentation (106) de montage de test à la seconde alimentation (158) de châssis de transport en réponse à la réception d'un quatrième signal (16A) de commutation de courant indiquant l'achèvement de la phase de test pour le second DUT (152),
le régisseur de commutation étant agencé pour engendrer les troisième et quatrième signaux (162, 162A) de commutation de courant.

15. Procédé de commutation de courant pour tester des premier et second dispositifs à tester 'DUT' (102, 152), électroniques, alimentés par batterie, en utilisant un système comprenant des premier et second châssis de transport (100, 150) agencés pour recevoir les premier et second DUT (102, 152), respectivement, et un montage de test (104) agencé pour recevoir les premier et second châssis de transport (100, 150) et pour tester les premier et second DUT (102, 152), respectivement, lorsque les premier et second châssis de transport (100, 152) sont en prise avec le montage de test (104), le procédé comprenant :
la fourniture de courant au premier DUT dans une phase de pré-test via une première alimentation de châssis de transport lorsque le DUT est logé dans le premier châssis de transport (164) ;
la commutation de la première alimentation de châssis de transport à une alimentation de montage de test en réponse à la réception d'un premier signal de commutation de courant indiquant la satisfaction d'une première condition de pré-test (166) ;
la commutation de l'alimentation de montage de test à la première alimentation de châssis de transport en réponse à la réception d'un deuxième signal de commutation de courant indiquant l'achèvement d'une phase de test pour le premier DUT (168) ;
la commutation de la seconde alimentation de châssis de transport à une alimentation de montage de test en réponse à la réception d'un troisième signal de commutation de courant indiquant la satisfaction d'une seconde condition de pré-test (180) ; et
la commutation de l'alimentation de montage de test à la seconde alimentation de châssis de transport en réponse à la réception d'un quatrième signal de commutation de courant indiquant l'achèvement d'une phase de test pour le second DUT (182).
